(19) Europäisches Patentamt

European Patent Office

Office européen des brevets

(11) EP 0 766 265 B1

# (12) FASCICULE DE BREVET EUROPEEN

(45) Date de publication et mention
de la délivrance du brevet:
**10.03.1999 Bulletin 1999/10**

(51) Int Cl.⁶: **G21C 17/06**, G01B 7/14

(21) Numéro de dépôt: **96401925.1**

(22) Date de dépôt: **09.09.1996**

(54) **Procédé et dispositif de mesure d'au moins une longueur caractéristique sur un crayon de combustible disposé à la périphérie d'un assemblage de combustible nucléaire**

Verfahren und Vorrichtung zum Messen mindestens einer charakterisierenden Länge eines Brennstabs an der Peripherie eines Kernbrennstabbündels

Method and apparatus for measuring at least one characteristic length of a fuel rod disposed at the periphery of a nuclear fuel assembly

(84) Etats contractants désignés:
**BE DE ES FR GB**

(30) Priorité: **27.09.1995 FR 9511333**

(43) Date de publication de la demande:
**02.04.1997 Bulletin 1997/14**

(73) Titulaires:
- **FRAMATOME
  92400 Courbevoie (FR)**
- **COGEMA
  F-78141 Velizy Villacoublay (FR)**

(72) Inventeur: **Petit, Christophe
69003 Lyon (FR)**

(74) Mandataire: **Bouget, Lucien et al
Cabinet Lavoix
2, Place d'Estienne d'Orves
75441 Paris Cédex 09 (FR)**

(56) Documents cités:
EP-A- 0 059 301    FR-A- 2 601 180
US-A- 3 967 382    US-A- 4 195 411
US-A- 4 741 878

- PATENT ABSTRACTS OF JAPAN vol. 012, no. 226 (P-722), 28 Juin 1988 & JP 63 019504 A (MITSUBISHI NUCLEAR FUEL CO LTD), 27 Janvier 1988
- PATENT ABSTRACTS OF JAPAN vol. 012, no. 226 (P-722), 28 Juin 1988 & JP 63 019502 A (MITSUBISHI NUCLEAR FUEL CO LTD), 27 Janvier 1988

## Description

L'invention concerne un procédé et un dispositif de mesure d'une longueur caractéristique sur un crayon d'un assemblage de combustible nucléaire.

Les assemblages de combustible nucléaire pour les réacteurs refroidis à l'eau et en particulier pour les réacteurs nucléaires refroidis par de l'eau sous pression comportent une ossature dans laquelle les crayons sont maintenus sous la forme d'un faisceau dans lequel les crayons sont tous parallèles entre eux.

Chacun des crayons du faisceau de l'assemblage de combustible nucléaire comporte une gaine tubulaire dont le diamètre est voisin par exemple d'un centimètre et dont la longueur peut être de l'ordre de quatre mètres. La gaine est réalisée en un matériau absorbant faiblement les neutrons tels qu'un alliage de zirconium. Le matériau combustible nucléaire qui peut être constitué par de l'oxyde d'uranium enrichi en uranium fissile est disposé à l'intérieur de la gaine sous forme d'une colonne de pastilles frittées de matériau combustible empilées l'une sur l'autre dans la direction axiale de la gaine. La gaine du crayon est fermée à une première extrémité par un bouchon engagé dans la partie d'extrémité de la gaine du crayon et soudé sur la gaine. La colonne de pastilles en matériau combustible disposée à l'intérieur de la gaine repose par l'une de ses extrémités sur une surface sensiblement plane du bouchon interne à la gaine. Ce premier bouchon du crayon combustible sur lequel repose la colonne de pastilles en matériau combustible constitue le bouchon inférieur du crayon, lorsque le crayon est disposé à l'intérieur d'un assemblage combustible en position de service dans le coeur d'un réacteur nucléaire ou en position de stockage dans une piscine.

Un second bouchon appelé bouchon supérieur est engagé et soudé à la seconde extrémité de la gaine du crayon, ce second bouchon comportant également une surface dirigée vers l'intérieur de la gaine. Afin de permettre une certaine dilatation et un certain gonflement des pastilles de matériau combustible sous l'effet de l'échauffement et des réactions nucléaires à l'intérieur du coeur du réacteur nucléaire, la colonne de pastilles en matériau combustible présente une longueur inférieure à la longueur de l'espace interne de la gaine du crayon entre la surface interne du bouchon inférieur et la surface interne du bouchon supérieur. La colonne de pastilles en matériau combustible est maintenue à l'intérieur de la gaine par un ressort hélicoïdal intercalé entre la surface interne du bouchon supérieur et l'extrémité supérieure de la colonne de pastilles opposée à l'extrémité de la colonne reposant sur le bouchon inférieur. Dans le réacteur nucléaire en service, les crayons de combustible sont soumis à un flux de neutrons qui permet de produire de l'énergie dans le matériau combustible des crayons par des réactions nucléaires. Les neutrons produits par les réactions nucléaires dans les pastilles de matériau combustible constituent le flux de neutrons à l'intérieur du coeur du réacteur nucléaire.

Les pastilles de matériau combustible subissent, du fait des réactions nucléaires et de l'échauffement dans le coeur du réacteur, des dilatations et un gonflement qui peuvent entraîner une déformation de la gaine du crayon. En outre, les contraintes thermiques et mécaniques auxquelles sont soumis les crayons combustibles des assemblages de combustible nucléaire dans le coeur du réacteur nucléaire peuvent entraîner des détériorations qui s'ajoutent à l'usure normale du combustible par consommation du matériau fissile, de sorte qu'une partie au moins des crayons de combustible des assemblages devient impropre à une utilisation dans les assemblages de combustible du coeur, après un certain temps de séjour dans le coeur du réacteur en fonctionnement.

On effectue périodiquement un rechargement du coeur du réacteur nucléaire qui consiste à remplacer par des assemblages neufs, une partie des assemblages du coeur (généralement un tiers) et à replacer les autres assemblages du coeur dans de nouvelles positions pour une nouvelle période de fonctionnement du réacteur nucléaire. Pour cela, après arrêt du réacteur nucléaire, les assemblages de combustible sont sortis du coeur et placés dans une piscine de stockage du combustible.

Il est nécessaire d'effectuer divers contrôles sur les assemblages de combustible avant de les replacer dans le coeur, ces contrôles portant aussi bien sur l'ossature de support des crayons des assemblages que sur les crayons eux-mêmes.

L'ossature des assemblages de combustible nucléaire comporte en particulier des grilles-entretoises réparties suivant la hauteur des assemblages de combustible, à des distances régulières les unes des autres, qui comportent un réseau de cellules généralement à maille carrée, dans chacune desquelles est placé un crayon de combustible qui est maintenu à l'intérieur de la cellule par des ressorts et par des bossettes d'appui.

La section des assemblages de combustible, généralement de forme carrée, comporte des rangées de crayons disposées suivant deux directions à 90°. Seules les quatre rangées périphériques de crayons sont facilement accessibles par l'extérieur de l'assemblage de combustible et peuvent faire l'objet d'examens tels que des examens visuels ou par des méthodes de contrôles non destructifs. Ces contrôles restent purement qualitatifs et ne permettent pas d'obtenir des mesures relatives à la déformation des crayons et à l'état du matériau combustible et du ressort à l'intérieur des gaines, après une certaine durée de fonctionnement du réacteur nucléaire.

Le fait qu'on ne puisse obtenir des données numériques précises limite l'efficacité des programmes d'essais de combustible dans un réacteur nucléaire.

On a proposé dans US-A-3 967 382 d'effectuer des contrôles sur les crayons des assemblages de combustible dans des stations de contrôle à l'intérieur de la piscine de stockage du combustible, mais pour effectuer ces contrôles, il est nécessaire de démonter les assemblages de combustible et d'extraire les crayons pour effectuer des examens des crayons irradiés sous eau.

La mesure de certaines longueurs caractéristiques d'un crayon combustible après un temps de séjour dans le réacteur nucléaire peut présenter un très grand intérêt, en ce qui concerne la connaissance du comportement des crayons de combustible dans le coeur d'un réacteur nucléaire. En particulier, il peut être extrêmement avantageux de pouvoir mesurer avec précision la longueur de la colonne de pastilles en matériau combustible fissile, ou colonne fissile, après un certain temps de séjour dans le coeur du réacteur en fonctionnement ou encore la longueur totale du crayon.

Jusqu'ici, on ne connaissait pas de procédé de mesure précis de longueurs caractéristiques sur un crayon de combustible irradié, dans un assemblage de combustible disposé sous eau à l'intérieur d'une piscine.

Le but de l'invention est donc de proposer un procédé de mesure d'au moins une longueur caractéristique sur un crayon de combustible disposé à la périphérie d'un assemblage de combustible nucléaire, le crayon de combustible comportant une gaine tubulaire, une colonne de pastilles en matériau combustible nucléaire empilées dans la direction axiale de la gaine, un premier bouchon de fermeture, ou bouchon inférieur, à une première extrémité de la gaine, en contact par une surface interne avec une première extrémité de la colonne de pastilles en matériau combustible, un second bouchon de fermeture de la seconde extrémité de la gaine ou bouchon supérieur et un ressort hélicoïdal intercalé entre une surface interne du second bouchon et une seconde extrémité de la colonne de pastilles en matériau combustible, à l'intérieur de la gaine, ce procédé permettant de déterminer de manière très précise une longueur caractéristique telle que la longueur de la colonne fissile du crayon ou la longueur totale du crayon, sans démontage de l'assemblage de combustible et sans extraction des crayons.

Dans ce but :

- on déplace une sonde à courants de Foucault suivant la direction axiale de la gaine du crayon,
- on détermine une première position de la sonde à courants de Foucault, par rapport à un repère, dans la direction axiale, dans laquelle un signal de la sonde est représentatif de la présence de la surface interne du premier bouchon au niveau de la sonde et au moins une seconde position dans laquelle le signal de la sonde est représentatif de la présence, au niveau de la sonde, de l'un des éléments suivants : partie d'extrémité du ressort en contact avec la seconde extrémité de la colonne de pastilles, surface interne du second bouchon, et
- on calcule la longueur caractéristique à partir de la première position et de la seconde position de la sonde définies par rapport au repère.

L'invention est également relative à un dispositif permettant de mettre en oeuvre le procédé de mesure suivant l'invention à l'intérieur d'une piscine du combustible usé d'un réacteur nucléaire.

Afin de bien faire comprendre l'invention, on va maintenant décrire, à titre d'exemple non limitatif, en se référant aux figures jointes en annexe, un mode de réalisation du procédé suivant l'invention permettant de déterminer la longueur de la colonne fissile et la longueur totale d'un crayon périphérique quelconque d'un assemblage de combustible à l'intérieur de la piscine de combustible d'un réacteur nucléaire à eau sous pression.

La figure 1 est une vue en coupe par un plan vertical d'un crayon d'un assemblage de combustible d'un réacteur nucléaire à eau sous pression.

La figure 2 est une vue en élévation d'un dispositif à courants de Foucault permettant la mise en oeuvre du procédé suivant l'invention.

La figure 2A est une vue schématique de dessus de la figure 2.

La figure 3 est une vue schématique de la chaîne de mesure de longueur associée au dispositif représenté sur la figure 2.

La figure 4 est une vue de dessus suivant 4 de la figure 5 de la sonde à courants de Foucault du dispositif de mesure représenté sur la figure 3, en contact avec un crayon de combustible périphérique d'un assemblage combustible.

La figure 5 est une vue de côté suivant 5-5 de la figure 4.

La figure 6 est une vue en coupe axiale de la sonde à courants de Foucault représentée sur les figures 4 et 5.

Les figures 7A, 7B et 7C représentent des enregistrements graphiques obtenus lors de la mise en oeuvre du procédé de mesure suivant l'invention.

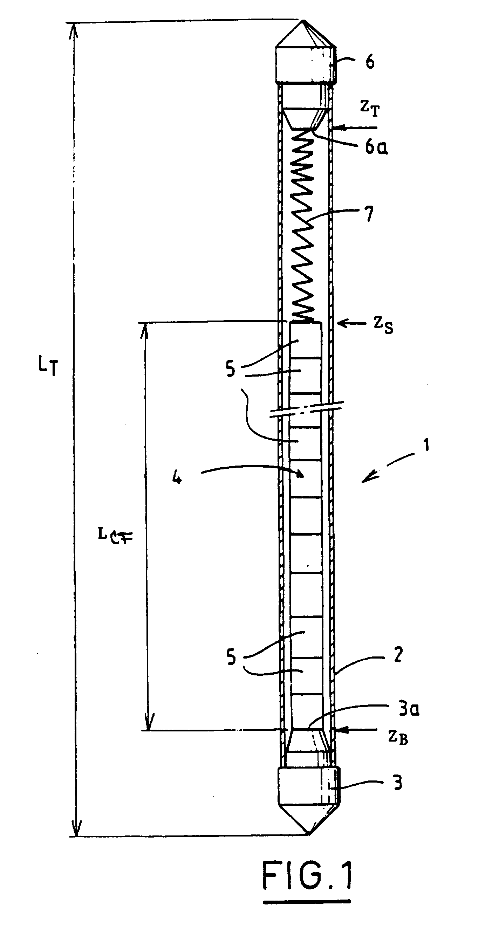

Sur la figure 1, on a désigné par la référence générale 1 un crayon d'un assemblage de combustible nucléaire d'un réacteur nucléaire à eau sous pression. Le crayon de combustible 1 comporte une gaine tubulaire 2 en un alliage de zirconium tel que le Zircaloy 4, présentant un diamètre de l'ordre d'un centimètre et une longueur de l'ordre de quatre mètres. Pour faciliter la représentation du crayon sur la figure 1, les proportions du crayon ont été fortement modifiées, le rapport du diamètre sur la longueur du crayon ayant été fortement accru.

Un premier bouchon 3, ou bouchon inférieur, est engagé dans une première partie d'extrémité de la gaine 2 dont le bouchon 3 assure la fermeture. Le bouchon 3 comporte une partie interne à la gaine de forme cylindro-tronconique dont le diamètre maximal (diamètre de la partie cylindrique) est sensiblement égal au diamètre intérieur de la gaine, de manière que le bouchon soit engagé pratiquement sans jeu dans la partie d'extrémité inférieure de la gaine. La partie du bouchon 3 disposée à l'intérieur de la gaine 2 se termine par une surface plane 3a constituant la petite base de l'extrémité tronconique de la partie interne du bouchon 3. La gaine 2 renferme une colonne 4 de pastilles de combustible nucléaire 5 empilées l'une sur l'autre suivant la direction axiale de la gaine 2. Dans un but de simplification, on a représenté la colonne 4 comme constituée d'une nombre relativement réduit de pastilles de matériau combustible. En réalité, la gaine renferme un très grand nombre de pastilles 5 empilées l'une sur l'autre. Les pastilles 5 peuvent être par exemple en un matériau combustible fissile tel que l'oxyde d'uranium $UO_2$ enrichi en uranium 235, obtenues par frittage. Une première extrémité de la colonne de matériau combustible ou colonne fissile 4 repose sur la surface interne 3a du bouchon inférieur 3.

A l'intérieur de la seconde partie d'extrémité de la gaine 2 du crayon opposée à la première extrémité fermée par le bouchon 3, est introduit un bouchon supérieur 6 dont la forme est sensiblement identique à la forme du bouchon inférieur 3 et qui comporte une partie cylindro-tronconique engagée à l'intérieur de la gaine 2 terminée par une surface interne plane 6a sensiblement perpendiculaire à l'axe de la gaine 2.

La longueur totale dans la direction axiale de la colonne 4 de pastilles en matériau combustible fissile 5 est inférieure à la longueur dans la direction axiale de la gaine entre les surfaces internes 3a du bouchon inférieur 3 et 6a du bouchon supérieur 6.

Un ressort hélicoïdal 7 est intercalé entre l'extrémité interne 6a du bouchon supérieur 6 et l'extrémité supérieure de la colonne fissile 4 opposée à l'extrémité de la colonne reposant sur la surface interne 3a du bouchon inférieur 3. Le ressort 7 qui est comprimé entre l'extrémité 6a du bouchon 6 et l'extrémité supérieure de la colonne fissile 4 assure le maintien des pastilles de combustible à l'intérieur de la gaine 2 du crayon 1.

Après mise en place du bouchon 3, on réalise la colonne fissile 4 par empilement des pastilles de matériau combustible fissile, la base de la colonne reposant sur la surface interne 3a du bouchon 3. On met ensuite en place le ressort hélicoïdal 7 et le bouchon supérieur 6 et on réalise le soudage des bouchons sur la gaine. Le volume intérieur de la gaine 2 est évacué et rempli de gaz inerte à partir du bouchon supérieur 6 qui est ensuite fermé de manière étanche.

Les pastilles de combustible fissile 5 ont un diamètre inférieur au diamètre intérieur de la gaine, de manière à permettre une dilatation radiale des pastilles 5, lors du gonflement sous irradiation des pastilles dans le réacteur nucléaire en fonctionnement.

La dilatation axiale de la colonne fissile 4 est compensée par le ressort hélicoïdal 7.

Après une certaine durée d'utilisation d'un assemblage de combustible dans le coeur d'un réacteur nucléaire, les crayons qui sont engagés dans l'ossature de l'assemblage peuvent avoir subi certaines détériorations qui se traduisent par une déformation de la gaine 2 et par une modification de la forme et de la longueur de la colonne fissile 4.

De manière à évaluer au mieux le comportement des crayons de combustible dans le réacteur en fonctionnement, il peut être nécessaire d'effectuer des mesures précises de longueurs caractéristiques du crayon et en particulier des mesures de longueur totale du crayon (longueur $L_T$ sur la figure 1) ou des mesures de longueur de la colonne fissile 4 ($L_{CF}$ sur la figure 1).

Il peut être extrêmement avantageux d'effectuer ces mesures dans la piscine de désactivation du combustible, sans démontage des assemblages de combustible.

Le procédé et le dispositif suivant l'invention permettent d'effectuer de telles mesures dans la piscine de désactivation, sur les crayons périphériques des assemblages de combustible déchargés du coeur et stockés dans la piscine du combustible usé.

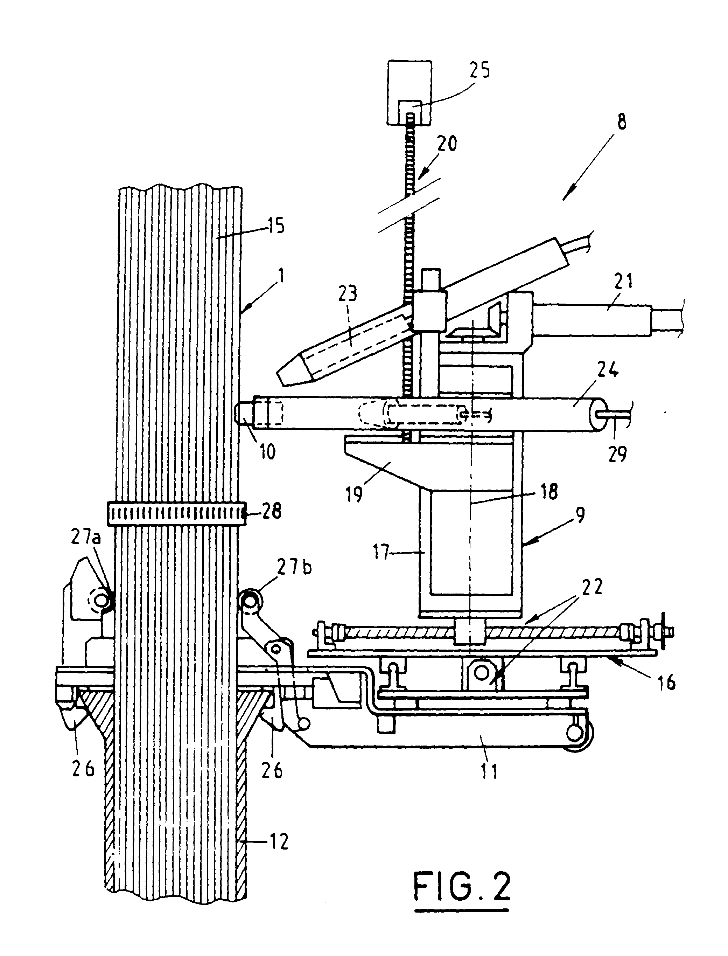

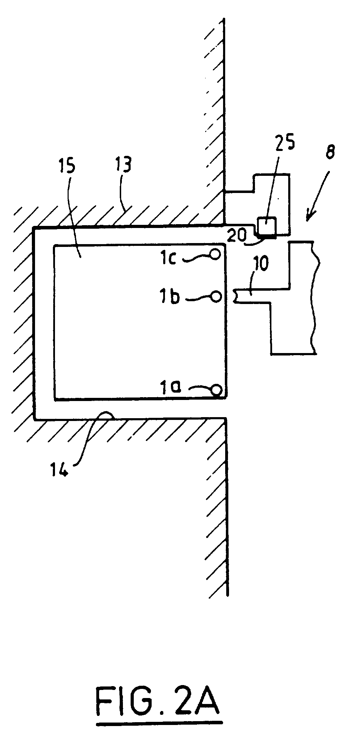

Pour effectuer les mesures de longueurs caractéristiques sur les crayons périphériques d'un assemblage de combustible, en mettant en oeuvre le procédé suivant l'invention, on peut utiliser un dispositif tel que représenté sur les figures 2 et 2A.

Le dispositif de mesure désigné de manière générale par le repère 8 comporte une sonde à courants de Foucault 10 portée par un ensemble de manutention 9 qui sera décrit ci-après, reposant lui-même sur un porteur 11 qui peut être rendu solidaire de l'alvéole 12 d'un descenseur de la piscine du combustible usé du réacteur nucléaire.

Comme il est visible sur les figures 2 et 2A qui représentent le dispositif de mesure 8 en position de service à l'intérieur de la piscine de stockage du combustible usé d'un réacteur nucléaire, la paroi 13 de la piscine comporte, à l'intérieur d'un logement 14 en retrait à l'intérieur de la paroi 13 de la piscine, un descenseur 12 constitué par une alvéole pouvant recevoir un assemblage de combustible 15 et associée à des moyens de déplacement dans la direction verticale à l'intérieur du logement vertical 14 dans la paroi de la piscine, pour assurer la descente d'un assemblage de combustible 15 dans le fond de la piscine. Les assemblages de combustible peuvent être pris en charge par le pont de manutention de la piscine du combustible usé pour être déposés dans des alvéoles fixes reposant sur le fond de la piscine du combustible usé.

Le dispositif de mesure 8 suivant l'invention est utilisé en association avec un descenseur de la piscine du combustible usé, le porteur 11 comportant des moyens permettant d'assurer son bridage sur la partie supérieure de l'alvéole 12 du descenseur de la piscine du combustible usé.

Le porteur 11 comporte un plateau horizontal sur lequel repose une table de déplacement 16 dans deux directions du plan horizontal à 90°. La table 16 ou table XY supporte une colonne de guidage verticale 17 sur laquelle est monté mobile dans la direction verticale de l'axe 18 un chariot 19 de déplacement de la sonde

10 dans la direction verticale.

Le dispositif qui vient d'être décrit permet de placer la sonde 10 en vis-à-vis d'un crayon quelconque situé à la périphérie de l'assemblage 15, tel que les crayons 1a, 1b ou 1c représentés sur la figure 2A, par un déplacement de la table XY 16 dans sa première direction de déplacement horizontal X.

Le second déplacement dans la direction horizontale (déplacement dans la direction Y) permet de déplacer la sonde à courants de Foucault 10 perpendiculairement à une face de l'assemblage combustible 15 entre une position dans laquelle la sonde 10 vient en contact avec un crayon de combustible 1 de l'assemblage 15, comme représenté sur la figure 2 et une position de retrait dans laquelle la sonde 10 ne se trouve pas en contact avec un crayon de l'assemblage, comme représenté sur la figure 2A.

Des moyens moteurs 22 commandés à distance depuis le bord de la piscine du combustible usé permettent de réaliser les déplacements en X et en Y du dispositif de mesure 8 comportant la sonde 10 ; les déplacements dans la direction verticale ou déplacements dans la direction Z de la sonde 10 sont obtenus de manière très précise et avec une vitesse très faible en utilisant un moyen moteur 21.

Les déplacements de la sonde 10 dans la direction verticale peuvent également être réalisés à grande vitesse, la sonde 10 étant dans sa position de retrait éloignée des crayons périphériques de l'assemblage de combustible 5, grâce au descenseur 12 sur lequel est bridé le porteur 11 sur lequel est monté le dispositif de mesure 8 et ses moyens de déplacement. Le déplacement à grande vitesse de l'ensemble de mesure 8 en utilisant le descenseur permet de placer la sonde 10 approximativement en vis-à-vis d'une zone de mesure d'un crayon de combustible de l'assemblage 15, tel que le bouchon inférieur, le bouchon supérieur ou la partie inférieure du ressort de maintien de la colonne fissile. Lorsqu'un positionnement approximatif de la sonde 10 en vis-à-vis de la zone de mesure est obtenu, on arrête le descenseur et on affine la position dans la direction verticale de la sonde 10 après sa mise en contact avec le crayon 1 sur lequel on effectue la mesure, par déplacement à très faible vitesse du chariot 19.

Lors des déplacements dans la direction verticale de la sonde 10, que ces déplacements soient réalisés à grande ou à faible vitesse, la position dans la direction Z de la sonde 10 est déterminée de manière très précise en utilisant un repère 20 placé verticalement le long de la paroi de la piscine du combustible dans une disposition adjacente au logement vertical 14 du descenseur.

Le repère 20 est constitué par une règle souple logée dans un boîtier enrouleur disposé au niveau supérieur de la piscine dont une extrémité est fixée au chariot 19 de déplacement en Z de la sonde à courants de Foucault 10, comportant des graduations qui peuvent être lues et comptées par un dispositif de codage 25.

Le dispositif de codage 25 disposé au niveau supérieur de la piscine fournit un signal de sortie à créneaux de forme carrée, chacun des créneaux du signal du codeur correspondant à une distance verticale de 0,1 mm. Il est donc possible de connaître la position de la sonde avec une précision de 0,1 mm.

Deux caméras vidéo 23 et 24 sont destinées à fournir, au niveau supérieur de la piscine, sur un écran une image de la partie d'extrémité de la sonde 10 pour vérifier sa mise en place en position de service sur un des tubes périphériques 1 de l'assemblage 15. La caméra 23 permet de donner une image de la sonde à courants de Foucault 10 par le dessus et la caméra 24 permet de fournir une image de l'extrémité de la sonde 10 dans une vue latérale.

Le porteur 11 du dispositif de mesure 8 et de ses moyens de déplacement en X, Y et Z comporte une ceinture de support comportant une ouverture interne carrée permettant le passage d'un assemblage combustible ainsi que des ergots 26 de fixation du porteur 11 sur la partie supérieure de l'alvéole 12 du descenseur, les ergots 26 étant associés à des dispositifs de manœuvre pouvant être actionnés depuis la partie supérieure de la piscine du combustible usé. Deux rouleaux de guidage 27a et 27b sont montés sur la surface supérieure de la ceinture du porteur 11, par l'intermédiaire de supports pivotants de manière à guider les déplacements du porteur 11 par rapport aux faces externes sensiblement planes de l'assemblage 15 à section carrée. Les supports des rouleaux de guidage 27a et 27b sont montés pivotants de manière à permettre le passage des rouleaux au niveau des grilles 28 de l'assemblage 15 dans lesquelles sont engagés les crayons de l'assemblage, maintenus ainsi suivant un réseau régulier.

La sonde à courants de Foucault 10 est montée sur un support fixé sur le chariot 19 à déplacement vertical et reliée par l'intermédiaire d'un câble de mesure 29 à un dispositif d'alimentation en courant électrique et d'exploitation des mesures disposé au niveau supérieur de la piscine. Les caméras 23 et 24 ainsi que les dispositifs de déplacement 21 et 22 sont également reliés à des moyens d'alimentation et de commande disposés au niveau supérieur de la piscine. On peut donc effectuer à distance l'alimentation de la sonde, le recueil des signaux de mesure, la visualisation de la partie d'extrémité de la sonde et des crayons en cours d'examen ainsi que la commande des déplacements de la sonde en X, Y et Z.

Les déplacements rapides de la sonde dans la direction Z sont commandés par les moyens de commande du descenseur de la piscine du combustible.

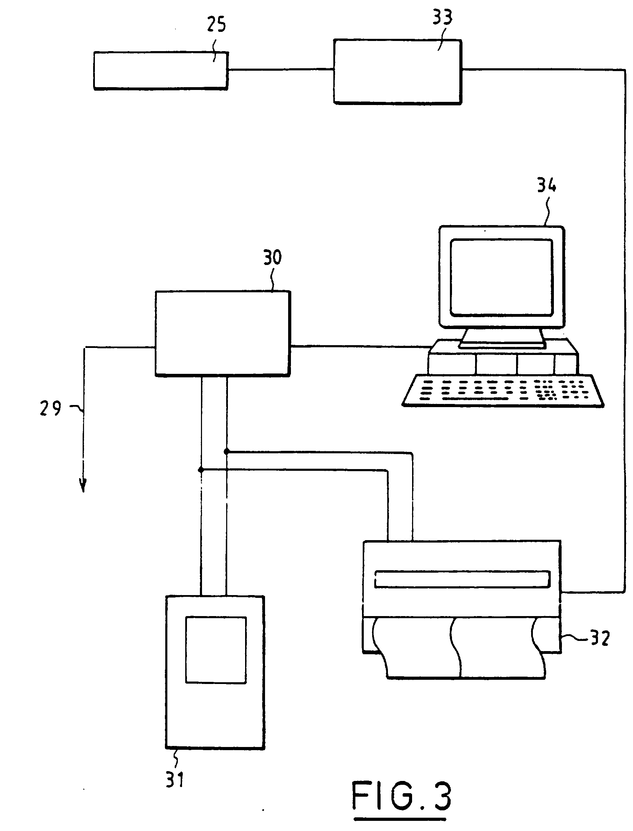

Sur la figure 3, on a représenté de manière schématique la chaîne de mesure associée au dispositif de mesure représenté sur la figure 2 et disposée au niveau supérieur de la piscine. La chaîne de mesure comporte une unité 30 appelée appareil à courants de Foucault rassemblant les moyens d'alimentation de la sonde à courants de Foucault et de recueil des signaux de mesure par l'intermédiaire du câble 29 ainsi qu'une unité 31 de visualisation des signaux de la sonde à courants de Foucault et un enregistreur graphique 32 de ces signaux.

L'appareil à courants de Foucault 30 comporte deux voies de sortie appelées voie X et voie Y reliées en parallèle à l'unité de visualisation 31 et à l'enregistreur 32.

La chaîne de mesure comporte de plus une unité d'affichage 33 reliée au codeur d'altitude 25 du dispositif de mesure permettant d'afficher à 0,1 mm près l'altitude de la sonde à courants de Foucault 10 à l'intérieur de la piscine du combustible usé. Un micro-ordinateur 34 permet de gérer l'ensemble du programme de mesure et d'enregistrer les résultats des mesures sur les différents crayons périphériques des assemblages combustibles sur lesquels on réalise les mesures de longueur caractéristique.

Le poste de contrôle et de mesure situé au niveau supérieur de la piscine comporte de plus des écrans de visualisation permettant de fournir à l'opérateur chargé des mesures des images de l'extrémité de la sonde provenant des caméras vidéo 23 et 24.

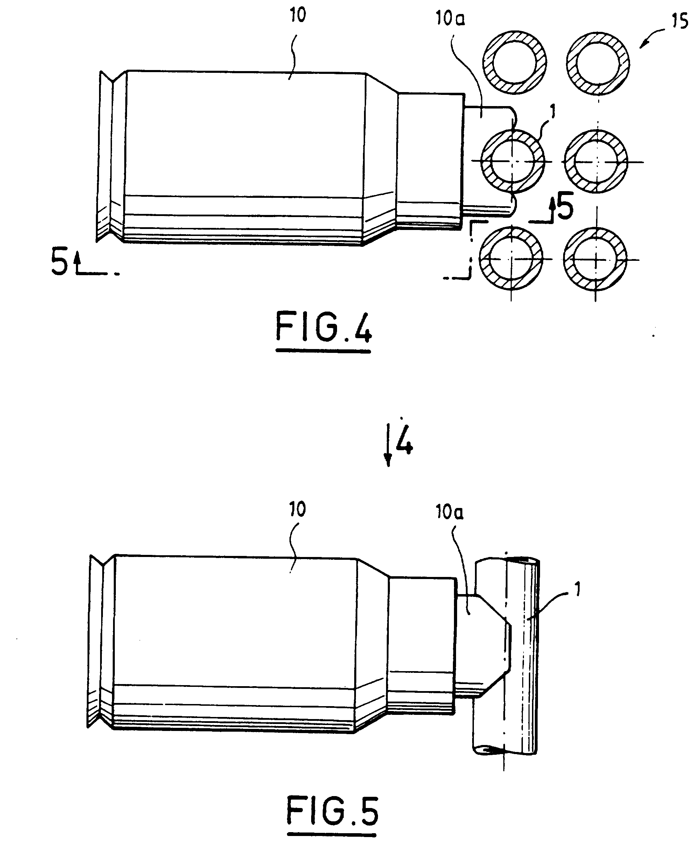

Sur les figures 4 et 5, on a représenté la sonde à courants de Foucault 10 dont la partie d'extrémité 10a constituant la tête de mesure est placée en contact avec un crayon combustible 1 du faisceau de l'assemblage de combustible nucléaire 15 sur lequel on réalise des mesures de longueur.

La tête de mesure 10a de la sonde à courants de Foucault 10 présente une forme échancrée et une surface de contact sensiblement cylindrique permettant un contact et un couplage parfaits entre la tête de mesure et la surface de la gaine du crayon combustible 1.

La tête de mesure 10a peut être réalisée en oxyde de zirconium $ZrO_2$ ou zircone.

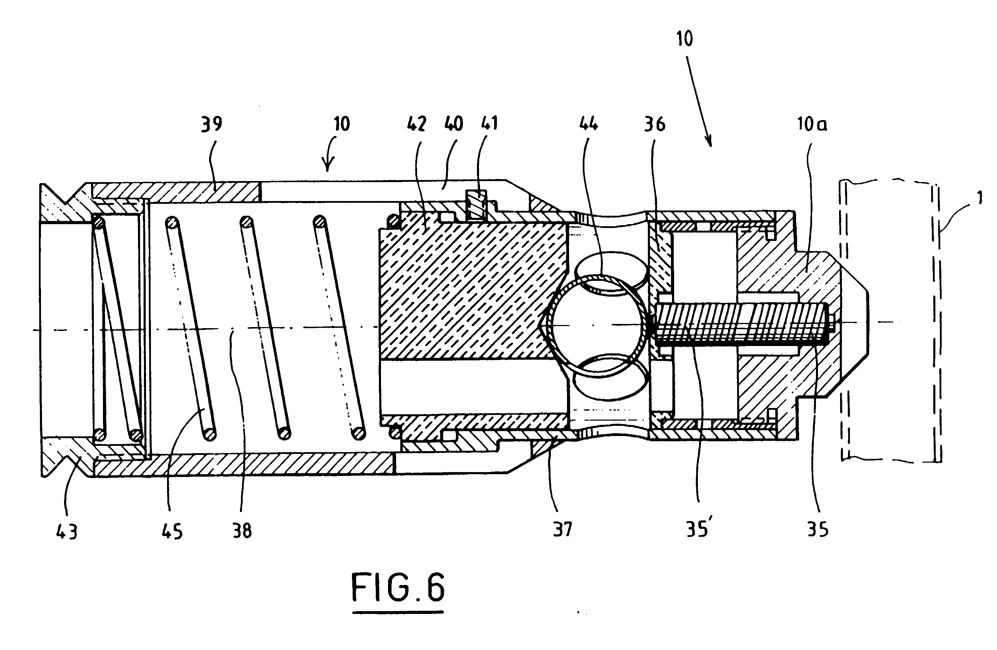

Sur la figure 6, on voit la sonde 10 dont la tête de mesure 10a constituant la partie d'extrémité venant en contact avec la gaine du crayon combustible 1 présente un logement pour recevoir une partie d'extrémité d'une bobine de mesure comportant un noyau en ferrite et deux bobinages 35 et 35' enroulés sur le noyau de manière à présenter un même axe et espacés dans la direction verticale. La seconde extrémité de la bobine du côté du bobinage 35' est engagée dans une cavité d'un support 36.

La bobine de mesure 35, 35', la tête de mesure 10a et le support 36 sont montés à l'intérieur d'un support mobile 37 monté coulissant dans la direction axiale 38 de la sonde à l'intérieur d'un corps principal de sonde 39. Le support mobile 37 et le corps principal 39 de la sonde sont de forme cylindrique et présentent pour axe commun l'axe 38 de la sonde. Le corps principal de sonde 39 comporte une rainure longitudinale 40 de direction axiale dans laquelle est engagé un pion de guidage 41 solidaire du support mobile 37. Le pion de guidage 41 est engagé avec un certain jeu dans la direction circonférentielle, à l'intérieur de la rainure 40. De cette manière, le support mobile 37 monté coulissant dans la direction axiale 38 sur le corps de sonde 39 ne peut pivoter autour de l'axe 38 que de manière limitée. La tête de mesure 10a et en particulier l'extrémité en forme de cavité cylindrique gardent ainsi une orientation par rapport aux crayons 1 verticaux du faisceau de l'assemblage de combustible nucléaire permettant l'engagement de la cavité sur un crayon pour effectuer les mesures, avec une certaine liberté de mouvement en rotation pour s'adapter au profil du crayon.

A l'intérieur du support mobile 37 est fixée une pièce de poussée 42 comportant une cavité ayant une section en vé dirigée vers la bobine de mesure 35, 35'. Un tube étalon de référence 44 constitué par une portion d'une gaine de crayon combustible analogue au crayon combustible 1 est intercalé entre le poussoir 42 et le support 36 de la partie d'extrémité du bobinage 35' de la bobine opposée à la tête de mesure 10a.

Dans la partie d'extrémité du corps principal 39 de la sonde 10 est vissée une pièce de butée annulaire 43. Un ressort hélicoïdal 45 est intercalé entre la pièce de butée 43 et la pièce de poussée 42. Le ressort hélicoïdal 45 permet d'autoriser des déplacements du support mobile 37 et de la tête de mesure 10a de la sonde 10 par rapport au corps principal 39 solidaire du support de sonde, aussi bien lors de l'accostage que pendant les déplacements de la sonde 10 dans la direction verticale. Le ressort 45 exerce une poussée sur le support mobile 37 et sur la tête de mesure 10a de telle manière que la tête de mesure 10a soit en contact parfait par sa surface d'extrémité cylindrique avec la surface externe de la gaine du crayon 1 sur lequel on effectue les mesures. Ce montage permet d'éviter d'exercer par l'intermédiaire de la sonde, un effort excessif sur la gaine du crayon et par l'intermédiaire du crayon sur les ressorts de maintien du crayon dans les cellules de grilles de l'assemblage combustible. On évite ainsi toute déformation plastique des ressorts de maintien des crayons de l'assemblage pendant les mesures effectuées sur les crayons périphériques.

Pour cela le chariot à déplacements en Y du dispositif de mesure 8 assurant l'avance de la sonde 10 en direction des crayons périphériques 1 de l'assemblage combustible comporte une butée d'arrêt avant dans une position telle que, dans sa position la plus avancée, le chariot de déplacement en Y provoque une mise en contact de la tête de mesure 10a de la sonde 10 avec le crayon combustible 1 et une compression du ressort 45 telle que l'effort exercé par la tête de mesure 10a de la sonde sur le crayon 1 soit au plus de 10 N.

En outre, dans le cas où le dispositif d'arrêt du chariot de déplacement en Y serait défaillant, le ressort 45 est prévu avec une constante telle que la force exercée sur la tête de mesure par le ressort comprimé au maximum, c'est-à-dire lorsque le doigt de guidage 41 est venu en butée dans le fond de la rainure du corps principal 39, soit au maximum de 25 N.

Comme il est visible sur les figures 5 et 6, la tête de mesure 10a comporte à sa partie supérieure et à sa partie inférieure deux surfaces de contact chanfreinées, inclinées à 45° par rapport à l'axe 38 de la sonde. Lors des déplacements dans la direction verticale de la sonde 10 en contact avec un crayon périphérique d'un assemblage de combustible, les parties inclinées de la sonde permettent de faire franchir aisément à la sonde les grilles de l'assemblage dont la ceinture périphérique est légèrement en saillie par rapport aux gaines des crayons périphériques de l'assemblage. Le franchissement est réalisé par mise en contact des surfaces chanfreinées de la tête de mesure 10a avec la ceinture périphérique de la grille-entretoise en particulier au niveau d'ailettes de guidage de l'assemblage de combustible dont l'inclinaison est identique à l'inclinaison des parties chanfreinées de la tête de mesure 10a et par un déplacement du support mobile 37 de la sonde vers l'arrière s'accompagnant de la compression du ressort 45.

Les bobinages de mesure 35 et 35' disposés dans le prolongement axial l'un de l'autre sont alimentés en courant alternatif de manière caractéristique pendant les mesures et déplacés au voisinage de la surface externe du crayon combustible sur lequel on effectue les mesures. Les variations des courants de Foucault circulant dans le crayon combustible en vis-à-vis de la sonde entraînent des variations de l'impédance de la sonde, ce qui permet de repérer certains éléments caractéristiques à l'intérieur de la gaine du crayon en fonction du signal fourni par la sonde à courants de Foucault.

En particulier, on a pu mettre en évidence des signaux caractéristiques, lorsque la sonde se trouve en vis-à-vis de la surface interne du bouchon inférieur ou du bouchon supérieur et également lorsque la sonde se trouve en vis-à-vis de la partie inférieure du ressort en appui sur la colonne de pastilles fissiles.

Le signal caractéristique peut être obtenu suivant les cas, soit sur la voie de sortie X soit sur la voie de sortie Y de l'appareil à courants de Foucault.

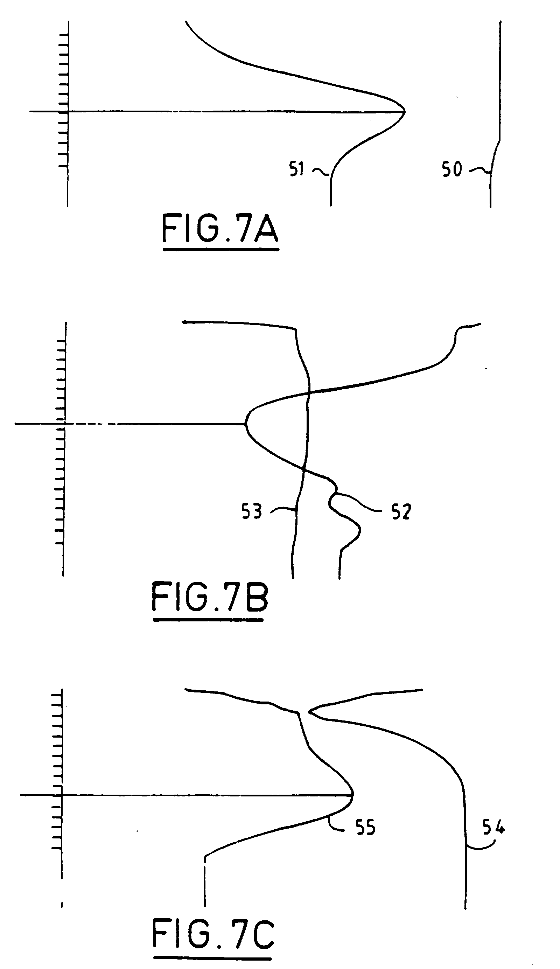

Sur les figures 7A, 7B et 7C, on a représenté les signaux caractéristiques obtenus sur la voie X et sur la voie Y de sortie de l'appareil à courants de Foucault, en vis-à-vis de l'échelle graduée suivant la direction verticale donnant l'altitude de la sonde à 0,1 mm près.

Les signaux représentés sur les figures 7A, 7B et 7C sont obtenus sur l'écran de l'unité de visualisation 31 de la chaîne de mesure.

Sur la figure 7A, on a représenté les signaux 50 et 51 provenant des sorties X et Y de l'appareil à courants de Foucault 30, lorsque la sonde 10 se trouve en vis-à-vis de la surface interne 3a du bouchon inférieur 3 d'un crayon combustible 1 tel que représenté sur la figure 1.

Le signal 51 de la voie Y de l'appareil à courants de Foucault présente un maximum très net qui permet de déterminer de manière extrêmement précise l'altitude de la surface interne 3a constituant l'extrémité inférieure de la colonne fissile 4.

Sur la figure 7B, on a représenté les signaux de sortie 52 et 53 sur les voies X et Y de l'appareil à courants de Foucault respectivement, lorsque la sonde se trouve en vis-à-vis de l'extrémité inférieure du ressort 7 du crayon 1 venant en contact avec l'extrémité supérieure de la colonne fissile 4. Le sommet du signal 52 provenant de la voie X de l'appareil à courants de Foucault permet de déterminer avec une très grande précision la position de l'extrémité inférieure du ressort, c'est-à-dire la position de l'extrémité supérieure de la colonne fissile 4.

Enfin, sur la figure 7C, on a représenté les signaux 54 et 55 qui sont respectivement les signaux de sortie des voies X et Y de l'appareil à courants de Foucault, lorsque la sonde 10 se trouve en vis-à-vis de la surface interne 6a du bouchon supérieur 6 du crayon combustible 1.

Le sommet du signal 55 de sortie de la voie Y permet de déterminer avec une très grande précision la position de la surface interne 6a du bouchon supérieur 6.

Lorsque les signaux caractéristiques de la présence en vis-à-vis de la sonde de la surface interne du bouchon inférieur, de l'extrémité inférieure du ressort et de la surface interne du bouchon supérieur apparaissent sur l'écran de l'unité de visualisation, on repère et on enregistre l'altitude de la sonde donnée par le codeur d'altitude.

En désignant par $Z_B$, $Z_R$ et $Z_H$ les altitudes respectives de la sonde lorsqu'on repère la surface interne du bouchon inférieur, la surface inférieure du ressort et la surface interne du bouchon supérieur respectivement, il est possible de déterminer la longueur totale du crayon $L_T$ et la longueur de la colonne fissile $L_{CF}$ par les formules suivantes :

$$L_T = Z_H - Z_B + 29,4$$

et

$$L_{CF} = Z_R - Z_B.$$

En effet, on connaît la longueur totale dans la direction axiale du bouchon inférieur et du bouchon supérieur, cette longueur étant de 29,4 mm. On a d'autre part déterminé les altitudes $Z_B$, $Z_R$ et $Z_H$ en millimètre de sorte que les formules données ci-dessus permettent de déterminer la longueur totale du crayon et la longueur de la colonne fissile, en millimètres, avec une précision de l'ordre de 0,1 mm.

Pour mettre en oeuvre le procédé suivant l'invention sur l'ensemble des crayons périphériques d'un assemblage de combustible stocké dans le fond de la piscine du combustible usé, on utilise le pont de manutention de la piscine du combustible usé pour prendre en charge l'assemblage de combustible et amener l'assemblage de combustible dans l'alignement de l'axe de l'alvéole 12 du descenseur sur la partie supérieure de laquelle est bridé le porteur du dispositif de mesure tel que représenté sur la figure 2.

L'assemblage de combustible est orienté de manière que l'une de ses faces périphériques soit dirigée perpendiculairement à l'axe 28 de la sonde montée sur le chariot 19 de déplacement vertical du dispositif de mesure 8. L'assemblage de combustible est ensuite maintenu dans cette position par le dispositif de manutention auquel il est suspendu.

La sonde est placée dans une position de retrait obtenue par recul du chariot de déplacement dans la direction Y de la table XY 16. Par déplacement en X de la table XY, on place l'axe de la sonde 10 en vis-à-vis d'un premier crayon de combustible périphérique de l'assemblage 15 disposé à une extrémité de la face périphérique dirigée vers la sonde de mesure.

En utilisant le descenseur, on réalise une mise en position approximative de la sonde 10 en vis-à-vis de la partie inférieure du crayon fermée par le bouchon inférieur.

Par déplacement en Y de la sonde dans le sens de l'avance, on réalise la mise en contact de la tête de mesure 10a de la sonde 10 avec la surface extérieure de la gaine du crayon. On alimente la sonde à courants de Foucault et on repère les signaux produits par la sonde pendant un déplacement à très faible vitesse dans la direction verticale en utilisant le chariot 19 de déplacement dans la direction Z. Le chariot 19 de déplacement dans la direction Z et ses moyens de guidage et de déplacement sont réalisés de manière à obtenir un déplacement maximal de la sonde dans la direction Z à une vitesse de l'ordre de 1 mm/seconde, sur une distance de 100 à 150 mm.

Lorsqu'on repère le signal caractéristique de la présence de la surface interne 3a du bouchon inférieur 3 tel que représenté sur la figure 7A, on enregistre l'altitude $Z_B$ donnée par le codeur d'altitude.

On réalise alors un retrait de la sonde par rapport au tube-guide par déplacement dans la direction Y de la sonde, pour l'éloigner du crayon combustible.

On utilise alors le descenseur pour déplacer le dispositif de mesure 8 fixé sur le porteur 11 solidaire de l'alvéole 12 dans la direction verticale jusqu'au moment où la sonde à courants de Foucault est parvenue dans une position en altitude qui est proche de la position théorique en altitude du sommet de la colonne fissile 4. On cherche alors à repérer le signal représentatif de la partie inférieure du ressort 7 de maintien des pastilles de combustible, tel que représenté sur la figure 7B, en déplaçant la sonde à petite vitesse dans la direction verticale après l'avoir remise en contact avec le crayon combustible 1 par déplacement en Y dans le sens de l'avance. Le repérage du signal 52 représentatif de la partie inférieure du ressort permet de déterminer l'altitude $Z_R$.

On replace alors la sonde en position de retrait et on déplace l'ensemble du dispositif de mesure jusqu'au voisinage de la partie supérieure du crayon pour déterminer l'altitude $Z_H$ de la surface interne 6a du bouchon supérieur 6.

On peut alors déterminer soit la longueur totale $L_T$ du crayon, soit la longueur de la colonne fissile $L_{CF}$ soit ces deux longueurs caractéristiques du crayon en utilisant les formules de calcul mentionnées ci-dessus.

Bien entendu, toutes les opérations d'acquisition des données relatives à l'altitude de la sonde et de calcul des longueurs caractéristiques du crayon combustible peuvent être obtenues de manière automatique en utilisant la chaîne de mesure représentée sur la figure 3. Les longueurs caractéristiques mesurées sont également stockées dans une mémoire en regard d'un numéro d'identification du crayon de l'assemblage.

Les mêmes opérations de déplacement de la sonde, de repérage des signaux et de mesure d'altitude sont réalisées pour chacun des crayons périphériques de la face de l'assemblage combustible 15 située en vis-à-vis de l'appareil de mesure.

On peut réaliser ensuite une rotation de 90° de l'assemblage de combustible suspendu au treuil du pont de manutention pour réaliser les mêmes opérations successivement sur chacun des crayons périphériques situés sur une seconde face de l'assemblage combustible.

Le procédé suivant l'invention permet donc d'obtenir de manière rapide et extrêmement précise, des longueurs caractéristiques des crayons de combustible périphériques d'assemblages combustibles irradiés stockés dans la piscine du combustible usé d'un réacteur nucléaire.

L'invention ne se limite pas au mode de réalisation qui a été décrit.

C'est ainsi qu'il est possible de mesurer des longueurs caractéristiques des crayons de combustible différentes de la longueur totale du crayon et de la longueur de la colonne fissile, en repérant des signaux caractéristiques de la présence de la sonde en vis-à-vis d'une zone déterminée du crayon disposée en un endroit précis suivant sa longueur.

Les déplacements du dispositif de mesure suivant la longueur du crayon et la mise en position de la sonde par rapport aux crayons sur lesquels on réalise des mesures peuvent être obtenus en utilisant des dispositifs différents d'une table à mouvements croisés XY et d'un chariot de déplacement dans la direction verticale Z.

De même, les déplacements rapides du dispositif de mesure suivant la longueur des crayons de l'assemblage peuvent être obtenus par un dispositif différent d'un descenseur de l'assemblage de combustible.

La sonde à courants de Foucault peut présenter une structure différente de celle qui a été décrite.

Dans certains cas, il est possible d'effectuer des corrections des mesures d'altitude de la sonde, suivant la position des crayons sur la face périphérique de l'assemblage de combustible.

L'invention peut s'appliquer à des mesures de longueurs sur des crayons périphériques d'assemblage de combustible nucléaire d'un type différent des assemblages de combustible nucléaire utilisés habituellement dans les réacteurs nucléaires à eau sous pression.

## Revendications

1. Procédé de mesure d'au moins une longueur caractéristique sur un crayon de combustible (1, 1a, 1b, lc) disposé à la périphérie d'un assemblage de combustible nucléaire, sans démontage de l'assemblage de combustible et sans extraction des crayons, le crayon de combustible comportant une gaine tubulaire (2), une colonne (4) de pastilles (5) en matériau combustible nucléaire empilées dans la direction axiale de la gaine (2), un premier bouchon de fermeture (3) ou bouchon inférieur, à une première extrémité de la gaine (2), en contact par une surface interne (3a) avec une première extrémité de la colonne (4) de pastilles (5) en matériau combustible, un second bouchon (6) de fermeture de la seconde extrémité de la gaine (2), ou bouchon supérieur, et un ressort hélicoïdal (7) intercalé entre une surface interne (6a) du second bouchon (6) et une seconde extrémité de la colonne (4) de pastilles (5) en matériau combustible, à l'intérieur de la gaine (2),
   caractérisé par le fait :

   - qu'on déplace une sonde (10) à courants de Foucault suivant la direction axiale de la gaine (2) du crayon (1),
   - qu'on détermine une première position de la sonde (10) à courants de Foucault, par rapport à un repère (20), dans la direction axiale, dans laquelle un signal de la sonde (10) est représentatif de la présence de la surface interne (3a) du premier bouchon (3) au niveau de la sonde (10) et au moins une seconde position dans laquelle le signal de la sonde (10) est représentatif de la présence, au niveau de la sonde (10), de l'un des éléments suivants : partie d'extrémité du ressort (7) en contact avec la seconde extrémité de la colonne (4) de pastilles (5), surface interne (6a) du second bouchon (6), et
   - qu'on calcule la longueur caractéristique à partir de la première position et de la seconde position de la sonde (10) définies par rapport au repère (20).

2. Procédé suivant la revendication 1, caractérisé par le fait que le signal de la sonde (10) dans la seconde position est représentatif de la présence, au niveau de la sonde (10) de la surface interne (6a) du second bouchon (6) et qu'on calcule la longueur totale $(L_T)$ du crayon de combustible (1) à partir d'un paramètre $(Z_B)$ représentatif de la position dans la direction axiale de la surface interne du premier bouchon (3), d'un second paramètre $(Z_H)$ représentatif de la position dans la direction axiale du crayon de la surface interne (6a) du second bouchon (6) et de la somme des longueurs dans la direction axiale du premier bouchon (3) et du second bouchon (6).

3. Procédé suivant la revendication 1, caractérisé par le fait que dans la seconde position, la sonde (10) se trouve en vis-à-vis de la partie inférieure du ressort (7) et qu'on calcule la longueur $(L_{CF})$ de la colonne fissile (4) du crayon (1) à partir d'un paramètre $(Z_B)$ représentatif de la position (10) de la surface interne (3a) du premier bouchon (3) et d'un second paramètre $(Z_R)$ représentatif de la position dans la direction axiale de la partie inférieure du ressort (7) en contact avec la seconde extrémité de la colonne fissile (4).

4. Procédé suivant l'une quelconque des revendications 1, 2 et 3, caractérisé par le fait que l'assemblage de combustible nucléaire (15) est placé dans une disposition dans laquelle la direction axiale des crayons de combustible est verticale, à l'intérieur d'une piscine de stockage du combustible usé d'un réacteur nucléaire.

5. Procédé suivant la revendication 4, caractérisé par le fait que l'assemblage de combustible est disposé suivant l'axe d'un descenseur placé dans une direction verticale suivant une paroi d'une piscine de stockage de combustible usé d'un réacteur nucléaire.

6. Procédé suivant l'une quelconque des revendications 1 à 5, caractérisé par le fait qu'on déplace la sonde à courants de Foucault (10) à grande vitesse dans un premier temps, de manière à la placer au voisinage de la première ou de la seconde positions par rapport au crayon de combustible périphérique (1) de l'assemblage combustible (15), dans la direction axiale du crayon de combustible (1), puis à une vitesse très inférieure à la première vitesse au voisinage de la première ou de la seconde position.

7. Dispositif de mesure d'au moins une longueur caractéristique sur un crayon de combustible (1) disposé à la périphérie d'un assemblage de combustible nucléaire (15), sans démontage de l'assemblage de combustible et sans extraction des crayons, le crayon de combustible (1) comportant une gaine tubulaire (2), une colonne (4) de pastilles (5) en matériau combustible nucléaire empilées dans la direction axiale de la gaine (2), un premier bouchon de fermeture (3) ou bouchon inférieur, à une première extrémité de la gaine (2), en contact par une surface interne (3a) avec une première extrémité de la colonne (4) de pastilles (5) en matériau combustible, un second bouchon (6) de fermeture de la seconde extrémité de la gaine (2), ou bouchon supérieur, et un ressort hélicoïdal (7) intercalé entre une surface interne (6a) du second bouchon (6) et une seconde extrémité de la colonne (4) de pastilles (5) en matériau combustible, à l'intérieur de la gaine (2),
caractérisé par le fait qu'il comporte :

- une sonde à courants de Foucault (10),
- des moyens de déplacement (12, 16, 19) de la sonde à courants de Foucault (10) dans une direction axiale du crayon de combustible (1) de l'assemblage combustible (15) et dans deux directions d'un plan perpendiculaire à la direction axiale du crayon, et
- des moyens de détermination (20, 25) de la position de la sonde (10) dans la direction axiale du crayon (1) de l'assemblage de combustible (15).

8. Dispositif suivant la revendication 7, caractérisé par le fait que les moyens de déplacement de la sonde (10) dans la direction axiale du crayon (1) de l'assemblage de combustible (15) comportent des moyens de déplacement (12) à une première vitesse et des moyens de déplacement (19, 21) à une seconde vitesse sensiblement inférieure à la première vitesse.

9. Dispositif suivant l'une quelconque des revendications 7 et 8, caractérisé par le fait que les moyens de déplacement (16, 22) de la sonde (10) dans deux directions d'un plan perpendiculaire à la direction du crayon combustible (1) de l'assemblage de combustible (15) sont constitués par une table à déplacements croisés comportant des chariots mobiles dans deux directions d'un même plan à 90° l'une de l'autre.

10. Dispositif suivant la revendication 8, caractérisé par le fait que le premier moyen de déplacement de la sonde à courants de Foucault (10) dans la direction axiale du crayon de combustible (1) de l'assemblage de combustible est constitué par un descenseur (12) d'une piscine de stockage de combustible usé d'un réacteur nucléaire.

11. Dispositif suivant la revendication 10, caractérisé par le fait qu'il comporte un porteur (11) muni de moyens d'accrochage (26) sur une alvéole mobile (12) du descenseur et un plateau horizontal sur lequel est monté dans une première direction horizontale un premier chariot d'une table à mouvements croisés (16) sur lequel est monté un second plateau de la table à mouvements croisés mobile dans une seconde direction horizontale perpendiculaire à la première direction, le second chariot de la table à mouvements croisés (16) portant une colonne (17) sur laquelle est monté mobile dans une direction verticale (18) un chariot (19) sur lequel est fixée la sonde de mesure (10).

12. Dispositif suivant l'une quelconque des revendications 7 à 11, caractérisé par le fait qu'il comporte des moyens (20, 25) de détermination de la position de la sonde (10) dans la direction axiale du crayon combustible (1) de l'assemblage de combustible nucléaire (15) constitués par une règle (20) portant des repères espacés dans la direction axiale et un détecteur (25) des repères de la règle (20).

13. Dispositif suivant l'une quelconque des revendications 7 à 12, caractérisé par le fait qu'il comporte de plus au moins une caméra vidéo (23, 24) de visualisation d'une partie (10a) de la sonde (10) destinée à venir en contact avec le crayon combustible (1).

14. Dispositif suivant l'une quelconque des revendications 7 à 13, caractérisé par le fait que la sonde à courants de Foucault (10) comporte :

- un corps principal (39) fixé sur un moyen de déplacement (19) de la sonde dans la direction axiale du crayon (1),
- un support mobile (37) monté coulissant à l'intérieur du corps principal (39) de la sonde (10) dans une direction axiale (38) de la sonde perpendiculaire à la direction axiale du crayon (1) de l'assemblage combustible (15),
- une bobine de mesure (35, 35') et une tête de mesure (10a) en contact avec une partie de la bobine (35, 35') et destinée à venir en contact avec le crayon combustible (1) de l'assemblage combustible (15), solidaires du support mobile (37), et
- un ressort hélicoïdal (45) de rappel du support mobile (37) et de la tête de mesure (10a) dans une position extraite de service, intercalé entre le corps principal (39) et le support mobile (37) de la sonde (10).

15. Dispositif suivant la revendication 14, caractérisé par le fait que la bobine de mesure (35, 35') comporte une première partie d'extrémité d'un premier bobinage (35) à l'intérieur de la tête de mesure (10a) destinée à venir en contact avec le crayon combustible (1) et une seconde partie d'extrémité d'un second bobinage (35') au voisinage d'un tube étalon (44) identique à une portion de la gaine du crayon combustible (1).

16. Dispositif suivant l'une quelconque des revendications 14 et 15, caractérisé par le fait que la tête de mesure (10a) comporte une cavité destinée à venir s'engager sur la surface extérieure de la gaine (2) du crayon de combustible (1).

17. Dispositif suivant l'une quelconque des revendications 14 à 16, caractérisé par le fait que le support mobile (37) et la tête de mesure (10a) sont montés sur le corps principal (39), avec une certaine liberté de mouvement en rotation autour d'un axe du corps principal (39) disposé suivant la direction axiale (38).

18. Dispositif suivant l'une quelconque des revendications 14 à 17, caractérisé par le fait que la tête de mesure (10a) est en oxyde de zirconium ou zircone.

19. Dispositif suivant l'une quelconque des revendications 14 à 18, caractérisé par le fait que la tête de mesure (10a) comporte des parties chanfreinées dont l'inclinaison par rapport à la direction axiale (38) est identique à l'inclinaison d'ailettes de guidage d'une ceinture périphérique d'une grille de l'assemblage de combustible.

**Patentansprüche**

1. Verfahren zum Messen wenigstens einer charakteristischen Länge an einem Brennstab (1, 1a, 1b, 1c), der am Umfang eines Kernbrennstabbündels angeordnet ist, ohne Demontage der Brennelementanordnung und ohne Herausziehen der Brennstäbe, wobei der Brennstab eine rohrförmige Hülle (2), eine Säule (4) aus Tabletten (5) aus nuklearem Brennmaterial, die in axialer Richtung der Hülle (2) gestapelt sind, einen ersten Schließstopfen (3) oder unteren Stopfen, an einem ersten Ende der Hülle (2), in Kontakt durch eine innere Oberfläche (3a) mit einem ersten Ende der Säule (4) von Tabletten (5) aus Brennmaterial, einen zweiten Schließstopfen (6) des zweiten Endes der Hülle (2), oder einen oberen Stopfen, und eine Schraubenfeder (7) aufweist, die zwischen der inneren Oberfläche (6a) des zweiten Stopfens (6) und einem zweiten Ende der Säule (4) der Tabletten (5) aus Brennmaterial im Inneren der Hülle (2) gesetzt ist, dadurch gekennzeichnet:

  - daß eine Wirbelstromsonde (10) entlang der axialen Richtung der Hülle (2) des Brennstabs (1) bewegt wird,

  - daß eine erste Position der Wirbelstromsonde (10) bezüglich einer Bezugsziffer oder -marke (20) in der axialen Richtung bestimmt wird, in der ein Signal der Sonde (10) dem Vorhandensein der inneren Oberfläche (3a) des ersten Stopfens (3) auf dem Niveau der Sonde (10) entspricht, und wenigstens eine zweite Position bestimmt wird, in der das Signal der Sonde (10) dem Vorhandensein auf dem Niveau der Sonde (10) von einem der nachfolgenden Elemente entspricht: Endabschnitt der Feder (7) in Kontakt mit dem zweiten Ende der Säule (4) von Tabletten (5), Oberfläche (6a) des zweiten Stopfens (6), und

  - daß die charakteristische Länge ausgehend von der ersten Position und der zweiten Position der Sonde (10), die bezüglich der Bezugsziffern (20) definiert sind, berechnet wird.

2. Verfahren nach Anspruch 1, dadurch gekennzeichnet, daß das Signal der Sonde (10) in der zweiten Position dem Vorhandensein auf der Höhe der Sonde (10) der inneren Oberfläche (6a) des zweiten Stopfens (6) entspricht, und daß die gesamte Länge ($L_T$) des Brennstabs (1) ausgehend von einem Parameter ($Z_S$), der der Position in der axialen Richtung der inneren Oberfläche des ersten Stopfens (3) entspricht, von einem zweiten Parameter ($Z_M$), der der Position in der axialen Richtung des Brennstabs der inneren Oberfläche (6a) des zweiten Stopfens (6) entspricht, und der Summe der Längen in der axialen Richtung des ersten Stopfens (3) und des zweiten Stopfens (6), berechnet wird.

3. Verfahren nach Anspruch 1, dadurch gekennzeichnet, daß in der zweiten Position die Sonde (10) sich gegenüber dem unterem Abschnitt der Feder (7) befindet, und daß die Länge ($L_{CF}$) der spaltbaren Säule (4) des Brennstabs (1) ausgehend von einem Parameter ($Z_S$), der der Position (10) der inneren Oberfläche (3a) des ersten Stopfens (3) entspricht und von einem zweiten Parameter ($Z_R$), der der Position in der axialen Richtung des unteren Abschnitts der Feder (7) in Kontakt mit dem zweiten Ende der spaltbaren Säule (4) entspricht, berechnet wird.

4. Verfahren nach einem der Ansprüche 1, 2 oder 3, dadurch gekennzeichnet, daß die Kernbrennelementanordnung (15) in eine Anordnung gesetzt wird, in der die axiale Richtung der Brennstäbe vertikal ist, im Inneren eines Speicherbeckens der benutzen Brennelemente eines Kernreaktors.

5. Verfahren nach Anspruch 4, dadurch gekennzeichnet, daß die Brennelementanordnung entlang der Achse einer Ablaßeinrichtung angeordnet ist, die in einer vertikalen Richtung entlang einer Seitenwand eines Speicherbekkens von gebrauchten Brennelementen eines Kernreaktors angeordnet ist.

6. Verfahren nach einem der Ansprüche 1 bis 5, dadurch gekennzeichnet, daß die Wirbelstromsonde (10) mit großer Geschwindigkeit in einer ersten Zeit derart bewegt wird, daß sie in die Nähe der ersten oder der zweiten Position bezüglich des Umfangs des Brennstabs (1) der Brennelementanordnung (15) plaziert wird, in der axialen Richtung des Brennstabs (1), sodann mit einer Geschwindigkeit, die erheblich unterhalb der ersten liegt, in der Nähe der ersten oder der zweiten Position bewegt wird.

7. Vorrichtung zum Messen wenigstens einer charakteristischen Länge an einem Brennstab (1), der am Umfang einer Kernbrennelementanordnung (15) angeordnet ist, ohne Demontage der Brennelementanordnung und ohne Herausziehen der Brennstäbe, wobei der Brennstab (1) eine rohrförmige Hülle (2), eine Säule (4) von Tabletten (5) aus Kernbrennelementmaterial, die in der Axialrichtung der Hülle (2) gestapelt sind, einen ersten Schließstopfen (3) oder unteren Stopfen, bei einem ersten Ende der Hülle (2), in Kontakt über eine innere Oberfläche (3a) mit einem ersten Ende der Säule (4) von Tabletten (5) aus brennbarem Material, einen zweiten Stopfen (6) zum Schließen der zweiten Öffnung der Hülle (2), oder oberen Stopfen, und eine Schraubenfeder (7) aufweist, die zwischen einer inneren Oberfläche (6a) des zweiten Stopfens (6) und einem zweiten Ende der Säule (4) von Tabletten (5) aus brennbarem Material, im Inneren der Hülle (2) eingezwängt ist, dadurch gekennzeichnet, daß sie aufweist:

- eine Wirbelstromsonde (10),

- Bewegungseinrichtungen (12, 16, 19) der Wirbelstromsonde (10) in eine axiale Richtung des Brennstabes (1) der Brennelementanordnung (15) und in zwei Richtungen einer Ebene senkrecht zur axialen Richtung des Stabes, und

- Bestimmungseinrichtungen (20, 25) der Position der Sonde (10) in der axialen Richtung des Stabes (1) der Brennelementanordnung (15).

8. Vorrichtung nach Anspruch 7, dadurch gekennzeichnet, daß die Bewegungseinrichtungen der Sonde (10) in der Axialrichtung des Brennstabes (1) der Brennelementanordnung (15) Einrichtungen zum Bewegen (12) bei einer ersten Geschwindigkeit und Einrichtungen zum Bewegen (19, 21) bei einer zweiten Geschwindigkeit aufweist, die wesentlich geringer ist als die erste Geschwindigkeit.

9. Vorrichtung nach Anspruch 7 oder 8, dadurch gekennzeichnet, daß die Bewegungseinrichtungen (16, 22) der Sonde (10) in zwei Richtungen einer Ebene senkrecht zur Richtung des Brennstabs (1) der Brennelementanordnung (15), durch einen Tisch mit sich kreuzenden Bewegungen gebildet sind, der Schlitten aufweist, die in zwei um 90° zueinander versetzte Richtungen einer selben Ebene beweglich sind.

10. Vorrichtung nach Anspruch 8, dadurch gekennzeichnet, daß die erste Bewegungseinrichtung der Wirbelstromsonde (10) in die axiale Richtung des Brennstabs (1) der Brennelementanordnung aus einer Rutsche (12) eines Speicherbeckens von abgenutzten Brennelementen eines Kernreaktors gebildet ist.

11. Vorrichtung nach Anspruch 10, dadurch gekennzeichnet, daß sie einen Träger (11) aufweist, der mit Anhängeinrichtungen (26) auf einem beweglichen Hohlraum (12) der Rutsche versehen ist, und eine horizontale Platte aufweist, auf der in einer ersten horizontalen Richtung ein erster Schlitten eines Tisches mit sich kreuzenden Bewegungen (16) montiert ist, auf dem eine zweite Platte des beweglichen Tisches mit sich kreuzenden Bewegungen in eine zweite horizontale Richtung senkrecht zur ersten Richtung angebracht ist, wobei der zweite Schlitten des Tischen mit sich kreuzenden Bewegungen (16) eine Säule (17) trägt, auf der beweglich in eine vertikale Richtung (18) ein Schlitten (19) angebracht ist, an dem die Meßsonde (10) befestigt ist.

12. Vorrichtung nach einem der Ansprüche 7 bis 11, dadurch gekennzeichnet, daß sie Einrichtungen (20, 25) zum Bestimmen der Position der Sonde (10) in die axiale Richtung des Brennstabs (1) der Kernbrennelementanordnung (15) aufweist, gebildet durch ein Lineal (20), das Maßstriche bzw. Bezugsstriche trägt, die in der axialen Richtung beabstandet sind, und einen Detektor (25) der Maßstriche des Lineals (20) aufweist.

13. Vorrichtung nach einem der Ansprüche 7 bis 12, dadurch gekennzeichnet, daß sie darüber hinaus wenigstens eine Videokamera (23, 24) zur Visualisierung eines Abschnitts (10a) der Sonde (10) aufweist, der dazu dient, in Kontakt mit dem Brennstab (1) zu kommen.

14. Vorrichtung nach einem der Ansprüche 7 bis 13, dadurch gekennzeichnet, daß die Wirbelstromsonde (10) aufweist:

- einen Hauptkörper (39), der auf einer Bewegungseinrichtung (19) der Sonde in die Axialrichtung des Brennstabs (1) befestigt ist,

- einen beweglichen Träger (37), der gleitbeweglich im Inneren des Hauptkörpers (39) der Sonde (10) in eine axiale Richtung (38) der Sonde senkrecht zur axialen Richtung des Brennstabs (1) der Brennelementanordnung (15) angebracht ist,

- eine Meßspule(35, 35') und einen Meßkopf (10a) in Kontakt mit einem Abschnitt der Meßspule (35, 35') und der dazu dient, in Kontakt mit dem Brennstab (1) der Brennelementanordnung (15) zu kommen, verbunden mit dem beweglichen Träger (37), und

- eine Rückdruckschraubenfeder (45) des beweglichen Trägers (37) und des Meßkopfes (10a) in eine Außerbetriebsstellung, welche zwischen dem Hauptkörper (39) und dem beweglichen Träger (35) der Sonde (10) eingezwängt ist.

15. Vorrichtung nach Anspruch 14, dadurch gekennzeichnet, daß die Meßspule (35, 35') einen ersten Endabschnitt einer ersten Aufwickelung (35) im Inneren des Meßkopfes (10a), der dazu dient in Kontakt mit dem Brennstab (1) zu kommen, und einen zweiten Endabschnitt einer zweiten Aufwickelung (35') in der Nähe eines Eichrohres (44) aufweist, das identisch ist zu einem Abschnitt der Hülle des Brennstabs (1).

16. Vorrichtung nach Anspruch 14 oder 15, dadurch gekennzeichnet, daß der Meßkopf (10a) eine Vertiefung aufweist, die dazu dient in die äußere Oberfläche der Hülle (2) des Brennstabs (1) einzugreifen.

17. Vorrichtung nach einem der Ansprüche 14 bis 16, dadurch gekennzeichnet, daß der mobile Träger (37) und der Meßkopf (10a) auf dem Hauptkörper (39) angebracht sind, mit einer gewissen Bewegungsfreiheit in der Drehung um eine Achse des Hauptkörpers (39), die entlang der axialen Richtung (38) angeordnet ist.

18. Vorrichtung nach einem der Ansprüche 14 bis 17, dadurch gekennzeichnet, daß der Meßkopf (10a) aus Zirkoniumoxid oder Zirkonoxid ist.

19. Vorrichtung nach einem der Ansprüche 14 bis 18, dadurch gekennzeichnet, daß der Meßkopf (10a) abgephaste Abschnitte aufweist, deren Neigung bezüglich der axialen Richtung (38) identisch zur Neigung von Führungslaschen eines Umfangsgurtes eines Gitters der Brennelementanordnung ist.

**Claims**

1. A method for measuring at least one characteristic length on a fuel rod (1, 1a, 1b, 1c) disposed at the periphery of a nuclear fuel assembly, without dismantling the fuel assembly and without extracting the rods, the fuel rod comprising a tubular sheath (2), a column (4) of pellets (5) made from nuclear fuel material which are stacked in the axial direction of the sheath (2), a first end cap (3) or lower end cap, at a first end of the sheath (2), in contact by an internal surface (3a) with a first end of the column (4) of pellets (5) made from combustible material, a second end cap (6) for closing the second end of the sheath (2), or upper end cap, and a helical spring (7) placed between an internal surface (6a) of the second end cap (6) and a second end of the column (4) of pellets (5) made from combustible material, in the interior of the sheath (2), **characterised in that:**

- an eddy current probe (10) is moved in the axial direction of the sheath (2) of the rod (1),
- a first position of the eddy current probe (10) is determined in relation to a reference mark (20) in the axial direction, in which a signal of the probe (10) is representative of the presence of the internal surface (3a) of the first end cap (3) at the level of the probe (10) and at least a second position in which the signal of the probe (10) is representative of the presence, at the level of the probe (10), of one of the following components: end portion of the spring (7) in contact with the second end of the column (4) of pellets, internal surface (6a) of the second end cap (6), and
- the characteristic length is calculated from the first position and the second position of the probe (10) defined in relation to the reference mark (20).

2. A method according to Claim 1, **characterised in that** the signal of the probe (10) in the second position is representative of the presence, at the level of the probe (10), of the internal surface (6a) of the second end cap (6) **and in that** the total length ($L_T$) of the fuel rod (1) is calculated from a parameter ($Z_B$) representative of the position in the axial direction of the internal surface of the first end cap (3), from a second parameter ($Z_H$) representative of the position in the axial direction of the rod of the internal surface (6a) of the second end cap (6) and of the sum of the lengths in the axial direction of the first end cap (3) and of the second end cap (6).

3. A method according to Claim 1, **characterised in that** in the second position, the probe (10) is situated opposite the lower part of the spring (7), **and in that** the length ($L_{CF}$) of the fissile column (4) of the rod (1) is calculated from a parameter ($Z_B$) representative of the position (10) of the internal surface (3a) of the first end cap (3) and from a second parameter ($Z_B$) representative of the position in the axial direction of the lower part of the spring (7) in contact with the second end of the fissile column (4).

4. A method according to any one of Claims 1, 2 and 3, **characterised in that** the nuclear fuel assembly (15) is placed in an arrangement in which the axial direction of the fuel rods is vertical, inside a storage bay for the spent fuel of a nuclear reactor.

5. A method according to Claim 4, **characterised in that** the fuel assembly is disposed along the axis of a downward conveyor placed in a vertical direction along a wall of a storage bay for spent fuel of a nuclear reactor.

6. A method according to any one of Claims 1 to 5, **characterised in that** the eddy current probe (10) is moved at great speed in a first a period, so as to place it in the vicinity of the first or of the second position in relation to the peripheral fuel rod (1) of the fuel assembly (15), in the axial direction of the fuel rod (1), then at a speed much lower than the first speed in the vicinity of the first or second position.

7. A device for measuring at least one characteristic length on a fuel rod (1) disposed at the periphery of a nuclear fuel assembly (15), without dismantling the fuel assembly and without extracting the rods, the fuel rod (1) comprising a tubular sheath (2), a column (2) of pellets (5) made from nuclear fuel material which are stacked in the axial direction of the sheath (2), a first end cap (3) or lower cap, at a first end of the sheath (2), in contact by an internal surface (3a) with a first end of the column (4) of pellets (5) made from combustible material, a second end cap (6) for closing the second end of the sheath (2), or upper end cap, and a helical spring (7) placed between an internal surface (6a) of the second end cap (6) and a second end of the column (4) of pellets (5) made from combustible material, in the interior of the sheath (2), **characterised in that** it comprises:

- an eddy current probe (10),
- means (12, 16, 19) for displacement of the eddy current probe (10) in an axial direction of the fuel rod (1) of the fuel assembly (15) and in two directions of a plane perpendicular to the axial direction of the rod, and
- means (20, 25) for determining the position of the probe (10) in the axial direction of the rod (1) of the fuel assembly (15).

8. A device according to Claim 7, **characterised in that** the means for displacement of the probe (10) in the axial direction of the rod (10) of the fuel assembly (15) comprise means for displacement (12) at a first speed and means for displacement (19, 21) at a second speed which is substantially lower than the first speed.

9. A device according to any one of Claims 7 and 8, **characterised in that** the means (16, 22) for displacement of the probe (10) in two directions of a plane perpendicular to the direction of the fuel rod (10) of the fuel assembly (15) are formed by a cross table comprising slides movable in two directions of a same plane at 90° to one another.

10. A device according to Claim 8, **characterised in that** the first means for displacement of the eddy current probe (10) in the axial direction of the fuel rod (1) of the fuel assembly is formed by a downward conveyor (12) of a storage bay for spent fuel of a nuclear reactor.

11. A device according to Claim 10, **characterised in that** it comprises a carrier (11) equipped with means (26) for hooking onto a mobile receptacle (12) of the downward conveyor and a horizontal platform on which a first slide of a cross table (16) is mounted in a first horizontal direction, on which a second platform of the cross table is movably mounted in a second horizontal direction perpendicular to the first direction, the second slide of the cross table (16) bearing a column (17) on which a slide (19) is movably mounted in a vertical direction (18), on which the measuring probe (10) is fixed.

12. A device according to any one of Claims 7 to 11, **characterised in that** it comprises means (20, 25) for determining the position of the probe (10) in the axial direction of the fuel rod (1) of the nuclear fuel assembly (15) formed by a ruler (20) bearing reference marks spaced in the axial direction and a detector (25) of the reference marks of the ruler (20).

13. A device according to any one of Claims 7 to 12, **characterised in that** it also comprises at least one video camera (23, 24) for displaying a part (10a) of the probe (10) intended to come into contact with the fuel rod (1).

14. A device according to any one of Claims 7 to 13, **characterised in that** the eddy current probe (10) comprises:

- a main body (39) fixed to a means (19) for displacement of the probe in the axial direction of the rod (1),
- a mobile support (37) slidingly mounted inside the main body (39) of the probe (10) in an axial direction (38) of the probe perpendicular to the axial direction of the rod (1) of the fuel assembly (15),

- a measuring coil (35, 35') and a measuring head (10a) in contact with a part of the coil (35, 35') and intended to come into contact with the fuel rod (1) of the fuel assembly (15), which are attached to the mobile support (37), and

- a helical spring (45) for returning the mobile support (37) and the measuring head (10) into an out-of-service position, placed between the main body (39) and the mobile support (37) of the probe (10).

15. A device according to Claim 14, **characterised in that** the measuring coil (35, 35') comprises a first end portion of a first winding (35) inside the measuring head (10a) intended to come into contact with the fuel rod (1) and a second end portion of a second winding (35') in the vicinity of a standard tube (44) identical to a portion of the sheath of the fuel rod (1).

16. A device according to any one of Claims 14 and 15, **characterised in that** the measuring head (10a) comprises a cavity intended to come to engage on the outer surface of the sheath (2) of the fuel rod (1).

17. A device according to any one of Claims 14 to 16, **characterised in that** the mobile support (37) and the measuring head (10a) are mounted on the main body (39), with a certain freedom of rotational movement around an axis of the main body (39) disposed in the axial direction (38).

18. A device according to any one of Claims 14 to 17, **characterised in that** the measuring head (10a) is made from zirconium oxide or zirconia.

19. A device according to any one of Claims 14 to 18, **characterised in that** the measuring head (10a) comprises bevelled portions, the inclination of which in relation to the axial direction (38) is identical to the inclination of guide fins of a peripheral band of a plate of the fuel assembly.

# FIG.1

FIG.2

## FIG. 2A

FIG.3

FIG.4

FIG.5

FIG.6

FIG.7A

FIG.7B

FIG.7C